# FASCICULE DE BREVET EUROPEEN

(11) **EP 1 405 040 B1**
(45) Date de publication et mention de la délivrance du brevet: **15.06.2005**
(21) Numéro de dépôt: 02764933.4
(22) Date de dépôt: 28.06.2002
(51) Int. Cl.: G01C 23/00, G09B 9/30, G06T 15/20, G06T 17/50

(54) **PROCEDE D'AFFICHAGE D'INFORMATIONS CARTOGRAPHIQUES SUR ECRAN D'AERONEF**
VERFAHREN ZUR ANZEIGE VON KARTENINFORMATIONEN AUF EINER FLUGZEUGANZEIGE
METHOD FOR THE DISPLAY OF CARTOGRAPHIC INFORMATION ON AN AEROPLANE SCREEN

(30) Priorité: 29.06.2001 FR 0108667
(43) Date de publication de la demande: 07.04.2004
(73) Titulaire: Thales, 75008 Paris (FR)
(72) Inventeur: COPPOLINO, Erick, Thales Intellectual Property, F-94117 Arcueil cedex (FR)
(74) Mandataire: Esselin, Sophie
(86) Numéro de dépôt international: PCT/FR2002/002260
(87) Numéro de publication internationale: WO 2003/002944

(56) Documents cités:
- READ B C ET AL: "DEVELOPING THE NEXT GENERATION COCKPIT DISPLAY SYSTEM" PROCEEDINGS OF THE IEEE 1996 NATIONAL AEROSPACE AND ELECTRONICS CONFERENCE (NAECON). DAYTON, MAY 20 - 23, 1996, PROCEEDINGS OF THE IEEE NATIONAL AEROSPACE AND ELECTRONICS CONFERENCE (NAECON), NEW YORK, IEEE, US, vol. 1, 20 mai 1996 (1996-05-20), pages 411-415, XP000868776 ISBN: 0-7803-3307-1
- NERIUS K J: "COMANCHE MODULAR CONTROLS AND DISPLAYS SYSTEM" 14TH. DIGITAL AVIONICS SYSTEMS CONFERENCE (DASC). CAMBRIDGE, NOV. 5 - 9, 1995, DIGITAL AVIONICS SYSTEMS CONFERENCE (DASC), NEW YORK,NY: IEEE, US, vol. CONF. 14, 5 novembre 1995 (1995-11-05), pages 281-286, XP000753652 ISBN: 0-7803-3051-X

## Description

L'invention concerne le domaine des procédés d'affichage d'informations cartographiques sur écran d'aéronef.

Les informations cartographiques affichées permettent au pilote d'un aéronef d'une part de savoir à quel endroit il se trouve et d'autre part de connaître l'environnement de l'endroit où il se trouve. Dans toute la suite du texte, sauf mention contraire, le terme « pilote » se rapporte soit au pilote de l'aéronef si c'est lui qui regarde l'écran d'affichage des informations cartographiques soit à tout autre opérateur à bord de l'aéronef dont la fonction serait de regarder l'écran d'affichage des informations cartographiques. Les informations cartographiques affichées permettent au pilote de l'aéronef de répondre à son souci permanent lequel consiste à toujours avoir les moyens de gérer son environnement. Pour aider le pilote à gérer son environnement de façon correcte, le caractère ergonomique des informations cartographiques affichées est important car il permet au pilote d'avoir à sa disposition un maximum d'informations assimilable avec un minimum d'effort ce qui permet d'améliorer la qualité du pilotage de l'aéronef à ressources matérielles et humaines constantes, tout en respectant les consignes de sécurité. Les documents «Developing the next generation cockpit display system » de Read B C et Al (Proceedings of the IEEE 1996 National Aerospace and Electronics Conférence (NAECON). Dayton, may 20-23, 1996 - Proceedings of the IEEE National Aerospace and Electronics Conférence (NAECON), New-York, IEEE, US, vol. 1, 20 mai 1996, pages 411-415, XP000868776 ISBN: 0-7803-3307-1) et "Comanche modular controls and displays system" de Nerius K.J.(14^{th} Digital Avionics Systems Conference (DASC), Cambridge, Nov. 5-9, 1995, Digital Avionics Systems Conference (DASC), New-York, N.Y.:IEEE, US, vol. CONF. 14, 5 novembre 1995, pages 281-286, XP000753652 ISBN : 0- 7803-3051-X) constituent l'état de la technique antérieur pertinent pour le domaine de l'invention.

L'invention propose, pour augmenter l'ergonomie des informations cartographiques affichées, l'affichage de trois fenêtres représentant chacune un aspect du terrain d'une scène et étant corrélées entre elles. Les différents aspects représentés sont choisis de manière à ce que leur présentation simultanée et corrélée, sur un écran, permette au pilote d'embrasser du regard toutes les informations cartographiques qui lui sont essentielles pour se faire une représentation claire et complète du terrain qu'il survole ou bien qu'il a l'intention de survoler et cela même en cas de mauvaises conditions de visibilité ou de luminosité, par exemple dans le cas de conditions météorologiques dégradées ou bien lors d'un vol de nuit.

Selon l'invention, il est prévu un procédé d'affichage, sur un écran d'aéronef, de -lusieurs fenêtres représentant chacune un aspect distinct du terrain d'une scène survolée par l'aéronef, caractérisé en ce que le procédé peut présenter un affichage simultané d'au moins trois fenêtres corrélées entre elles qui sont, une fenêtre 2D5 représentant une vue de dessus surchargée d'une information de relief, une fenêtre 3D représentant une vue tridimensionnelle, une fenêtre profil représentant une vue de profil.

Selon l'invention, de manière plus précise, il est également prévu un procédé d'affichage, sur un écran d'aéronef, de plusieurs fenêtres comportant chacune une image cartographique représentant un aspect distinct du terrain d'une scène survolée par l'aéronef, caractérisé en ce que le procédé peut présenter un affichage simultané d'au moins trois fenêtres, une fenêtre 2D5 dont l'image cartographique représente une vue de dessus du terrain, ladite vue étant bidimensionnelle et surchargée par un ombrage représentatif du relief du terrain, une fenêtre 3D dont l'image cartographique représente une vue tridimensionnelle du terrain selon une direction privilégiée, une fenêtre profil dont l'image cartographique représente une vue de profil du terrain, ladite vue étant bidimensionnelle et représentative du relief du terrain sur une bande parallèle à un axe privilégié, et en ce que, d'une part la position du point de vue est la même pour les vues des trois fenêtres, et d'autre part l'orientation du point de vue est la même au moins pour les vues des fenêtres 2D5 et profil.

L'invention sera mieux comprise et d'autres particularités et avantages apparaîtront à l'aide de la description ci-après et des dessins joints, donnés à titre d'exemples, où :
- la figure 1 représente schématiquement un exemple de corrélation entre la vue 2D5 et la vue 3D, pour laquelle l'orientation du point de vue pour les fenêtres 2D5 et 3D est différente ;
- les figures 2 et 3 représentent schématiquement des exemples préférentiels d'affichage de fenêtres par le procédé selon l'invention ;
- les figures 4 à 7 représentent schématiquement d'autres exemples d'affichage de fenêtres par le procédé selon l'invention ;
- la figure 8 représente schématiquement un exemple préférentiel d'affichage de fenêtres par le procédé selon l'invention, mettant en évidence les dimensions relatives des différentes fenêtres.

Les informations cartographiques affichées sur l'écran représentent différents aspects du terrain survolé par l'aéronef. Chacun des aspects est représenté dans une fenêtre, le contenu de chaque fenêtre peut ainsi être appelée « carte » au sens général du terme. Le contenu de chaque fenêtre correspond à une carte numérique de grande qualité laquelle est l'équivalent des cartes papier classiquement connues. Les cartes numériques, conçues pour aéronef, sont par exemple à l'échelle 1/250000^{e}. Certaines informations cartographiques destinées à être affichées sur l'écran, comme notamment les informations de planimétrie, peuvent être stockées à bord de l'aéronef, dans une ou plusieurs mémoires d'un système cartographique, soit sous forme d'images, soit sous forme vectorielle.

Le système cartographique contenant les informations cartographiques destinées à être affichées sur l'écran peut être relié par exemple à un ou plusieurs des autres dispositifs que peut avantageusement comporter l'aéronef, parmi lesquels, un système de navigation ou de radionavigation, un système de liaison de données (« datalink » en terminologie anglo-saxonne), un viseur, un télémètre, une interface permettant une commande vocale de la part du pilote.

Les informations cartographiques destinées à être affichées sur l'écran sont, pour la plupart, réparties dans les trois fenêtres affichées sur l'écran et corrélées entre elles. Ces trois fenêtres, présentées et décrites ci-dessous, sont respectivement appelées fenêtre 2D5, fenêtre 3D et fenêtre profil. Chacune desdites fenêtres représente un aspect du terrain d'une scène survolée par l'aéronef ou destinée à être survolée par l'aéronef. Dans l'explication détaillée des fenêtres qui va suivre, ledit terrain sera appelé, par souci de simplicité, le terrain.

La fenêtre 2D5 représente une vue de dessus du terrain, ladite vue de dessus étant surchargée d'une information de relief ; d'où l'appellation 2D5, pouvant être comprise comme « deux dimensions et demie » dans la mesure où l'image cartographique contenue dans la fenêtre 2D5 contient, pour la partie de terrain représentée, plus d'informations qu'une carte à deux dimensions, mais moins d'informations qu'une carte à trois dimensions. De préférence, l'image cartographique de la fenêtre 2D5 représente une vue de dessus du terrain, ladite vue étant bidimensionnelle et surchargée par un ombrage représentatif du relief du terrain. Ledit ombrage véhicule l'information de relief de manière plus lisible pour le pilote que les classiques courbes de niveau. Ledit ombrage ne joue préférentiellement que sur la luminance des différentes teintes affichées dans la fenêtre. L'image cartographique de la fenêtre 2D5 assure au pilote une possibilité d'anticipation par rapport au relief du terrain et par rapport aux menaces potentielles pour l'aéronef, que ne permet pas toujours l'image cartographique contenue dans la fenêtre 3D.

La fenêtre 3D représente une vue tridimensionnelle du terrain. De préférence, l'image cartographique de la fenêtre 3D représente une vue tridimensionnelle du terrain selon une direction privilégiée. L'image cartographique de la fenêtre 3D représente alors un secteur angulaire de l'image cartographique de la fenêtre 2D5. En effet, lorsque l'image cartographique de la fenêtre 3D représente un secteur angulaire plus large qu'un angle de 120 degrés, l'impression produite sur le pilote est désagréable, c'est pourquoi préférentiellement l'image cartographique de la fenêtre 3D correspond à un secteur angulaire de l'image cartographique de la fenêtre 2D5, la vue tridimensionnelle étant alors selon une direction privilégiée qui est la bissectrice intérieure du secteur angulaire. Cette direction privilégiée, si elle était représentée, correspondrait à une droite dans le plan de l'image cartographique de la fenêtre 2D5. L'image cartographique de la fenêtre 3D, selon que le champ visuel est masqué ou non par un obstacle, par exemple une montage, ne permet pas ou permet une anticipation de la part du pilote. Inversement, en terrain très dégagé, l'image cartographique de la fenêtre 3D peut permettre au pilote de voir plus loin que l'image cartographique de la fenêtre 2D5. La vue tridimensionnelle est très utile pour le pilote car elle est soit une aide précieuse au pilotage dans des conditions de visibilité dégradée, par exemple conditions météorologiques du type brouillard ou bien vol de nuit, soit une restitution des conditions réelles permettant une anticipation pour le pilote de ce que seront les conditions dégradées de visibilité lorsqu'il survolera le terrain à un autre moment ultérieur.

La fenêtre profil représente une vue de profil du terrain. De préférence, l'image cartographique de la fenêtre profil représente une vue de profil du terrain, ladite vue étant bidimensionnelle et représentative du relief du terrain sur une bande parallèle à un axe privilégié. Cet axe privilégié, situé à égale distance de chacune des extrémités de la bande qui lui est parallèle, est de préférence une droite parallèle au cap de l'aéronef et passant par la position dudit aéronef. Le relief du terrain représenté dans la fenêtre profil correspond avantageusement au majorant sur la largeur de la bande, ladite largeur étant orthogonale à l'axe privilégié. Ainsi, par mesure de sécurité, en chaque point de l'axe privilégié, c'est le relief du point le plus haut de la zone se trouvant de part et d'autre de l'axe privilégié et englobant l'axe privilégié qui est indiqué au pilote. Dans d'autres modes de réalisation moins avantageux, la vue de profil du terrain est représentative du terrain sur le seul axe privilégié ou bien sur un ensemble d'axes étant parallèles entre eux et comprenant l'axe privilégié. Ces modes de réalisation sont moins avantageux car les marges de sécurité pour le pilote sont moins importantes. L'image cartographique de la fenêtre profil a, sur les moyens radar souvent utilisés par les aéronefs rapides du type avion, l'avantage de pouvoir être obtenue de manière furtive, c'est-à-dire par des moyens qui ne révèlent pas la présence dudit aéronef à des menaces potentielles, ce qui n'est bien sûr pas le cas avec lesdits moyens radar. L'image cartographique de la fenêtre profil représente une sorte de coupe du terrain à court terme.

L'aéronef utilisant le procédé d'affichage selon l'invention est de préférence un aéronef lent du type hélicoptère. Mais l'aéronef peut aussi être un aéronef rapide du type avion. Pour l'hélicoptère comme pour l'avion, le fond cartographique affiché est semblable, par contre les outils associés peuvent être différents. Par exemple, un avion possède des moyens radar ayant des fonctions terrain qui rendent moins cruciale la présence de la fenêtre profil représentant une coupe court terme du terrain.

Dans l'aéronef, le procédé d'affichage selon l'invention affiche des informations cartographiques dans les trois fenêtres décrites ci-dessus, à savoir la fenêtre 2D5, la fenêtre 3D, la fenêtre profil. Ces trois fenêtres sont de préférence affichées sur un seul et unique écran spécifique qui est dédié à la conduite de mission. Mais ces trois fenêtres pourraient être affichées sur n'importe lequel ou lesquels des écrans classiques que comporte un aéronef, par exemple sur l'un des écrans ND, PFD et MCDU (respectivement pour « navigation display », « primary flight display » et « multipurpose control display unit » en terminologie anglo-saxonne), ou encore sur plusieurs écrans voisins ou accolés les uns aux autres. L'écran dédié à la conduite de mission est de préférence presque vertical c'est-à-dire légèrement incliné seulement par rapport à la verticale, par exemple une dizaine de degrés, afin de limiter les basculements de tête du pilote et d'éviter les réflexions lumineuses dues au soleil.

De préférence, le procédé d'affichage selon l'invention comprend au moins deux modes de fonctionnement, un mode navigation dans lequel la position du point de vue dans la fenêtre 2D5 est verticalement décentrée par rapport à la fenêtre 2D5 et dans lequel l'orientation du point de vue dans la fenêtre 2D5 correspond au cap de l'aéronef, ainsi qu'un mode gestion dans lequel la position du point de vue dans la fenêtre 2D5 est centrée par rapport à la fenêtre 2D5 et dans lequel l'orientation du point de vue dans la fenêtre 2D5 correspond à une direction fixe indépendante du cap de l'aéronef, par exemple la direction du nord. Le mode navigation est un mode « à court terme » dans lequel le terrain de la scène affichée est survolé par l'aéronef ou en passe d'être bientôt survolé par l'aéronef. Le mode gestion est un mode « à moyen terme », une sorte de préjeu dans lequel le pilote ou un autre opérateur fait défiler le paysage par avance, parfois nettement avant que l'aéronef arrive dessus. De préférence, les fenêtres 2D5 et 3D peuvent être utilisées soit en mode navigation soit en mode gestion, tandis que la fenêtre profil ne peut être utilisée qu'en mode navigation. La possibilité d'affichage simultanée des trois fenêtres corrélées n'est donc requise qu'en mode navigation pour le procédé d'affichage selon l'invention.

Une caractéristique importante du procédé d'affichage selon l'invention est que les fenêtres affichées sur l'écran sont au nombre d'au moins trois, à savoir les fenêtres 2D5, 3D et profil. Une autre caractéristique importante du procédé d'affichage selon l'invention est que ces trois fenêtres sont corrélées entre elles. Chacune de ces fenêtres représentant une image cartographique, a une position de point de vue ainsi qu'une orientation de point de vue. Lors d'une rotation de l'image cartographique d'une fenêtre, la position du point de vue de ladite fenêtre est le point autour duquel l'image cartographique de ladite fenêtre tourne. Lors d'une translation de l'image cartographique d'une fenêtre, l'orientation du point de vue de ladite fenêtre est la direction selon laquelle l'image cartographique de ladite fenêtre se translate. Comme ces trois fenêtres sont corrélées, il existe une relation déterminée entre les trois positions correspondantes de point de vue entre elles ainsi qu'entre les trois orientations correspondantes de point de vue entre elles. Lesdites fenêtres sont nécessairement corrélées au niveau du terrain, préférentiellement corrélées au niveau des cibles. La corrélation desdites fenêtres au niveau des autres objets représentés est intéressante mais facultative.

De manière préférentielle, la position des points de vue est la même pour les vues des trois fenêtres, c'est la position de l'aéronef en mode navigation. De manière préférentielle, l'orientation du point de vue est la même pour les vues des fenêtres 2D5 et profil, c'est le cap de l'aéronef en mode navigation, l'orientation du point de vue de la vue de la fenêtre 3D pouvant être différente, mais elle est alors préférentiellement matérialisée sur la vue de la fenêtre 2D5, par exemple par un secteur angulaire qui est dessiné sur la vue 2D5 et qui représente le secteur angulaire embrassée par la vue tridimensionnelle de la fenêtre 3D.

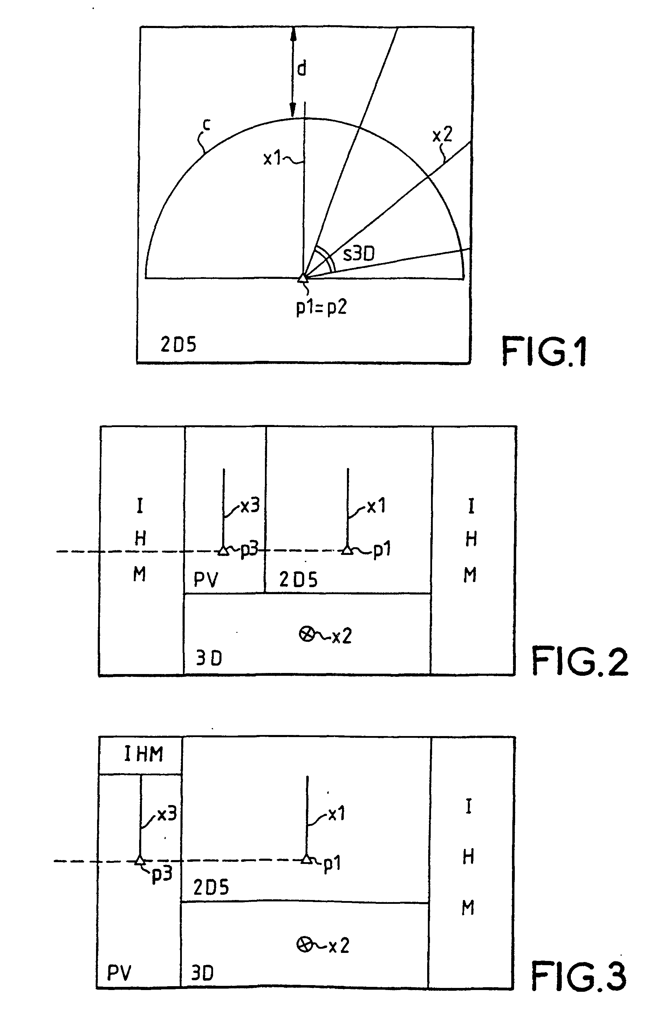

La figure 1 représente schématiquement un exemple de corrélation entre la vue 2D5 et la vue 3D, dans lequel les orientations de point de vue ne sont pas les mêmes pour les vues des fenêtres 2D5 et 3D. La fenêtre représentée est la fenêtre 2D5. Le mode est le mode navigation. Soit p1 la position de l'aéronef, x1 le cap de l'aéronef. Le point p1 est situé dans la partie inférieure de la fenêtre 2D5 comme le montre la présence de l'écart d, C étant un demi-cercle des points équidistants du point p1. Le secteur angulaire de la vue tridimensionnelle de la fenêtre 3D est représenté sur la fenêtre 2D5 par le secteur s3D. L'axe x2 est la bissectrice du secteur angulaire s3D, il représente l'orientation du point de vue dans la fenêtre 3D. Toutefois, de manière préférentielle, l'orientation du point de vue est la même pour les vues des trois fenêtres, à savoir les fenêtres 2D5, 3D et profil; dans ce cas, l'axe x1 serait la bissectrice intérieure du secteur angulaire s3D et serait confondue avec l'axe x2 lequel axe x2 serait alors préférentiellement vertical sur la figure 1.

Soit l'orientation de l'écran déterminée par rapport à l'utilisateur qui regarde l'écran sur lequel sont affichées les informations cartographiques et qui sera le plus souvent le pilote de l'aéronef. La fenêtre 2D5 est préférentiellement, soit rectangulaire de grande dimension verticale, soit carrée. La fenêtre profil est préférentiellement rectangulaire de grande dimension verticale et avantageusement située en regard et à côté de la fenêtre 2D5. La fenêtre 3D est préférentiellement rectangulaire de grande dimension horizontale et avantageusement située d'une part en regard de la fenêtre 2D5 et d'autre part au-dessus ou au-dessous de la fenêtre 2D5. Le caractère rectangulaire de grande dimension verticale de tout ou partie des fenêtres comportant une image cartographique, notamment la fenêtre 2D5, la fenêtre 3D et la fenêtre profil, permet en mode navigation de privilégier la vue du terrain située à l'avant de l'aéronef, permettant ainsi une meilleure anticipation du pilote. Les fenêtres sont avantageusement situées en regard les unes des autres, elles peuvent aussi toutefois présenter des débordements les unes par rapport aux autres.

De préférence, la fenêtre 3D est centrée par rapport à la dimension horizontale de l'écran. Une vue tridimensionnelle de la fenêtre 3D décentrée est envisageable mais déconseillée car ce caractère décentré perturbe un peu le pilote lorsqu'il regarde l'écran.

De chaque côté de l'ensemble constitué par les trois fenêtres comportant des images cartographiques et représentant respectivement des aspects distincts du terrain, le procédé peut avantageusement afficher une ou plusieurs fenêtres d'interface homme machine. Ces fenêtres d'interface homme machine peuvent aussi être remplacées par des boutons situés à l'extérieur de l'écran.

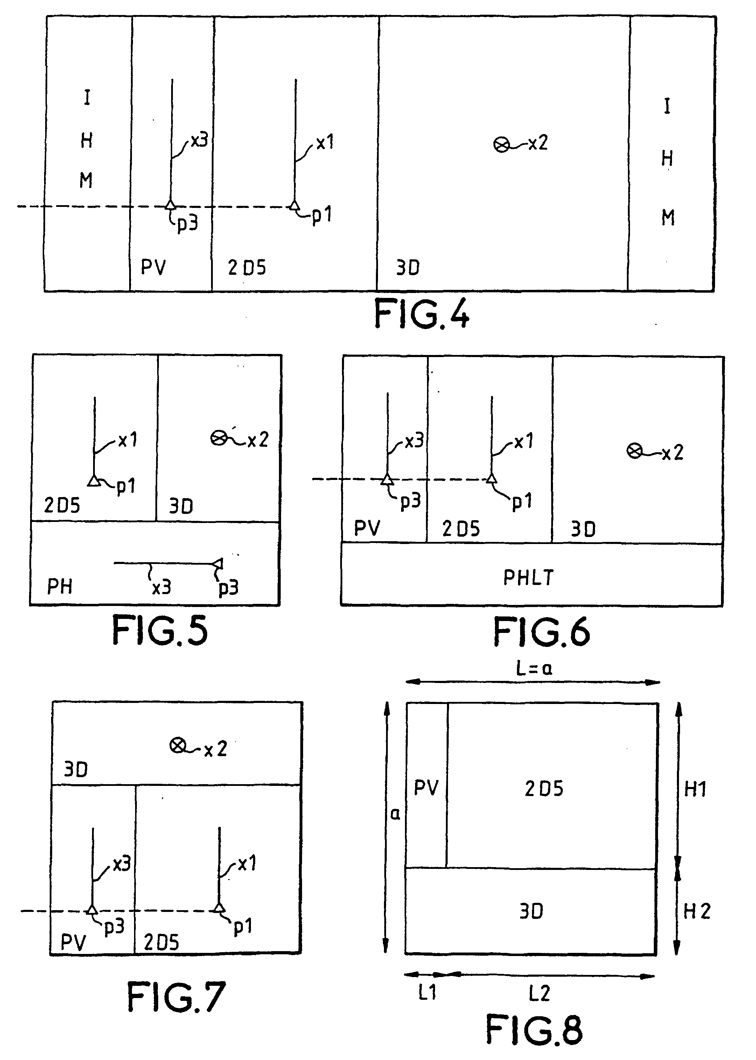

De préférence, l'orientation de l'écran étant déterminée par rapport à l'utilisateur, la position du point de vue est, à même hauteur sur l'écran, dans les fenêtres 2D5 et profil. De plus, les droites représentant respectivement l'orientation du point de vue dans les fenêtres 2D5 et profil sont avantageusement parallèles sur l'écran. Ainsi, le pilote est capable de faire une corrélation directe et instantanée entre les vues des fenêtres 2D5 et profil. Sur l'ensemble des figures 2 à 7 décrites ci-après, seule la figure 5 ne permet pas cette corrélation directe et instantanée. La disposition relative des fenêtres représentées sur la figure 5 est par conséquent la moins bonne, quoique restant toutefois envisageable. Les droites représentant l'orientation du point de vue dans les fenêtres 2D5 et profil sont préférentiellement verticales sur l'écran.

Les figures 2 et 3 représentent schématiquement des exemples préférentiels d'affichage de fenêtres par le procédé selon l'invention. Les figures 4 à 7 représentent schématiquement d'autres exemples d'affichage de fenêtres par le procédé selon l'invention. Sur l'ensemble des figures 2 à 7, sont représentées la fenêtre 2D5, la fenêtre 3D et la fenêtre profil, la fenêtre profil étant dénommée PV lorsqu'elle est verticale ou PH lorsqu'elle est horizontale. La disposition relative préférentielle ou non de l'ensemble de ces fenêtres est mise en évidence sur ces figures 2 à 7 tandis que les dimensions relatives préférentielles des différentes fenêtres sont mises en évidence sur la figure 8. Sur certaines figures seulement (par souci de simplicité), sont aussi représentées des fenêtres IHM, c'est-à-dire des fenêtres interface homme machine, quoique toutes les dispositions représentées sur les figures 2 à 7 puissent en comporter. Les positions de point de vue dans les fenêtres 2D5, 3D, et profil sont respectivement les points p1, p2 et p3 tandis que les orientations de point de vue dans les fenêtres 2D5, 3D, et profil sont respectivement les axes x1, x2et x3. L'axe x2 est perpendiculaire au plan des figures 2 à 7, tandis que le point p2 est située au-dessus du plan des figures 2 à 7 et par conséquent non représenté sur lesdites figures. Sur l'ensemble des figures 2 à 7, les positions de point de vue ainsi que les orientations de point de vue sont les mêmes pour les fenêtres 2D5, 3D et profil. A titre d'exemple, la projection du point p2 sur la fenêtre 2D5 donnerait le point p1 et la projection de l'axe x3 sur la fenêtre 3D donnerait l'axe x2. Toutes les dispositions représentant des dispositions symétriques, par rapport à une symétrie d'axe vertical, des dispositions représentées sur les figures 2 à 7 sont équivalentes aux dispositions dont elles sont les symétriques et sont par conséquent explicitement inclues dans la description suivante des figures 2 à 7.

Sur la figure 2, la fenêtre profil PV est située à gauche de la fenêtre 2D5 tandis que la fenêtre 3D est située sous la fenêtre 2D5 et sous la fenêtre profil PV. Deux fenêtres IHM sont situées de part et d'autre de l'ensemble constitué par les fenêtres comportant une image cartographique, à savoir les fenêtres 2D5, 3D et profil PV.

Sur la figure 3, la fenêtre profil PV est située à gauche de la fenêtre 2D5 et de la fenêtre 3D tandis que la fenêtre 3D est située sous la fenêtre 2D5. Une fenêtre IHM est située à droite de l'ensemble constitué par les fenêtres comportant une image cartographique, à savoir les fenêtres 2D5, 3D et profil PV. Une autre fenêtre IHM est située en haut de la fenêtre profil PV ainsi qu'à gauche de la fenêtre 2D5.

Sur la figure 4, le champ vertical des fenêtres et par conséquent la faculté d'anticipation du pilote sont améliorées mais au détriment de l'ergonomie globale laquelle est optimale pour des dispositions telles que celles représentées aux figures 2 et 3. De gauche à droite se succèdent une fenêtre IHM, la fenêtre profil PV, la fenêtre 2D5, la fenêtre 3D, une autre fenêtre IHM.

Sur la figure 5, la fenêtre profil est une fenêtre profil PH horizontale. La fenêtre 2D5 est située à gauche de la fenêtre 3D tandis que la fenêtre profil PH est située sous l'ensemble constituée par les fenêtres 2D5 et 3D. Cette disposition est la moins bonne de celles représentées aux figures 2 à 7, car elle ne permet pas de corrélation directe et instantanée entre les vues des fenêtres 2D5 et profil PH, de la part du pilote.

Sur la figure 6, se succèdent de gauche à droite la fenêtre profil PV, la fenêtre 2D5, la fenêtre 3D, une autre fenêtre appelée PHLT. La fenêtre PHLT est une fenêtre profil horizontal à long terme, elle représente une vue horizontale en coupe du terrain lequel terrain reste immobile sur l'écran tandis qu'un curseur représentant la position de l'aéronef se déplace dans la fenêtre PHLT de l'écran selon le mouvement de l'aéronef.

Sur la figure 7, la fenêtre profil PV est située à gauche de la fenêtre 2D5 tandis que la fenêtre 3D est située au-dessus de la fenêtre 2D5 et au-dessus de la fenêtre profil PV.

De préférence, les trois fenêtres sont accolées entre elles de manière à former sensiblement un carré de côté a, la fenêtre 2D5 formant sensiblement un rectangle de grande dimension horizontale 5a/6 et de petite dimension verticale 2a/3, la fenêtre profil formant sensiblement un rectangle de dimensions 2a/3 par a/6, la fenêtre 3D formant sensiblement un rectangle de dimensions a par a/3. Une disposition de fenêtres d'une telle taille est avantageuse dans la mesure où la fenêtre 2D5 possède la plus grande surface pour pouvoir représenter une grande quantité d'informations cartographiques pour une étendue importante de terrain, où la fenêtre 3D présente un secteur angulaire substantiellement plus large en gisement qu'en site, ce que préfère le pilote, et où la fenêtre profil n'occupe que la surface relativement faible nécessaire à la représentation de son information cartographique peu dense : le rapport entre densité d'informations cartographiques affichées et surface utilisée d'écran est alors assez optimisé. Un exemple d'une disposition de fenêtres d'une telle taille est représentée sur la figure 8.

La figure 8 représente schématiquement un exemple préférentiel d'affichage de fenêtres par le procédé selon l'invention, mettant en évidence les dimensions relatives des différentes fenêtres. L'ensemble des fenêtres 2D5, 3D et profil PV forment un carré de côté a. La largeur L1 de la fenêtre profil PV vaut a/6 tandis que sa hauteur H1 vaut 2a/3. La largeur L2 de la fenêtre profil PV vaut 5a/6 tandis que sa hauteur H1 vaut 2a/3. La largeur L3 de la fenêtre profil PV vaut a tandis que sa hauteur H2 vaut a/3.

La forme préférentielle de toutes les fenêtres utilisées est de préférence rectangulaire et carrée car c'est la forme à la fois la plus usuelle et la plus ergonomique pour la représentation d'informations cartographiques. Mais d'autres formes sont envisageables dans la mesure où elles ne perturbent pas ou pas trop la représentation que le pilote peut se faire du terrain en regardant les images cartographiques représentées dans les différentes fenêtres.

De manière préférentielle, lorsque le terrain est orienté suivant le cap de l'aéronef, c'est-à-dire en mode navigation, d'une part l'éclairement de la vue 2D5 est artificiel et fixe par rapport à l'écran quels que soient les changements d'orientation de l'aéronef, et d'autre part l'éclairement de la vue 3D est réaliste et variable par rapport à l'écran de manière à tenir compte de l'évolution de la position réelle du soleil en fonction des changements d'orientation de l'aéronef. L'orientation de l'écran étant déterminée par rapport à l'utilisateur, l'éclairement de la vue 2D5 comporte avantageusement une source ponctuelle située au-dessus et à gauche du coin supérieur gauche de ladite vue 2D5. L'éclairement peut aussi, de manière optionnelle, comporter une autre source qui est diffuse et qui est située au zénith de ladite vue 2D5. Ces réalisations préférentielles mais optionnelles présentent un double avantage. D'une part le pilote ne risque pas de confondre les creux et les bosses du terrain survolé, ce qui peut malheureusement devenir le cas lorsque l'éclairement de la fenêtre 2D5 est réaliste et variable et que l'aéronef se déplace plutôt cap au sud, surtout en cas de fatigue du pilote. D'autre part l'éclairement réaliste et variable est plus adapté pour la vue de la fenêtre 3D, car il correspond mieux au paysage réel tel que peut le voir le pilote en regardant par le cockpit de l'aéronef dans des conditions météorologiques correctes.

## Revendications

1. Procédé d'affichage, sur un écran d'aéronef, de plusieurs fenêtres (2D5, 3D, PV, PH) représentant chacune un aspect distinct du terrain d'une scène survolée par l'aéronef, **caractérisé en ce que** le procédé comprend un affichage simultané d'au moins trois fenêtres corrélées entre elles qui sont, une fenêtre 2D5 représentant une vue de dessus surchargée d'une information de relief, une fenêtre 3D représentant une vue tridimensionnelle, une fenêtre profil (PV, PH) représentant une vue de profil.

2. Procédé d'affichage selon la revendication 1, **caractérisé en ce que** :
les fenêtres (2D5, 3D, PV, PH) comportant chacune une image cartographique,
la vue de le fenêtre 2D5 est bidimensionnelle et surchargée par un ombrage représentatif du relief du terrain,
l'image cartographique de la fenêtre 3D représente une vue tridimensionnelle du terrain selon une direction privilégiée (x2),
l'image cartographique de la fenêtre profil (PV, PH) représente une vue de profil du terrain, ladite vue étant bidimensionnelle et représentative du relief du terrain sur une bande parallèle à un axe privilégié (x3),
et **en ce que**,
d'une part la position (p1, p2, p3) du point de vue est la même pour les vues des trois fenêtres,
et d'autre part l'orientation (x1, x3) du point de vue est la même au moins pour les vues des fenêtres 2D5 et profil.

3. Procédé d'affichage selon la revendication 2, **caractérisé en ce que** le relief du terrain représenté dans la fenêtre profil (PV, PH) correspond au majorant sur la largeur de la bande, ladite largeur étant orthogonale à l'axe privilégié (x3).

4. Procédé d'affichage selon l'une quelconque des revendications précédentes, **caractérisé en ce que** l'orientation (x1, x2, x3) du point de vue est la même pour les vues des trois fenêtres.

5. Procédé d'affichage selon l'une quelconque des revendications précédentes, **caractérisé en ce que**, lorsque le terrain est orienté suivant le cap de l'aéronef, d'une part l'éclairement de la vue 2D5 est artificiel et fixe par rapport à l'écran quels que soient les changements d'orientation de l'aéronef, et d'autre part l'éclairement de la vue 3D est réaliste et variable par rapport à l'écran de manière à tenir compte de l'évolution de la position réelle du soleil en fonction des changements d'orientation de l'aéronef.

6. Procédé d'affichage selon la revendication 5, **caractérisé en ce que**, l'orientation de l'écran étant déterminée par rapport à l'utilisateur, l'éclairement de la vue 2D5 comporte une source ponctuelle située au-dessus et à gauche du coin supérieur gauche de ladite vue 2D5.

7. Procédé d'affichage selon la revendication 6, **caractérisé en ce que**, l'orientation de l'écran étant déterminée par rapport à l'utilisateur, l'éclairement de la vue 2D5 comporte aussi une source diffuse située au zénith de ladite vue 2D5.

8. Procédé d'affichage selon l'une quelconque des revendications précédentes, **caractérisé en ce que**, l'orientation de l'écran étant déterminée par rapport à l'utilisateur, la fenêtre 2D5 est rectangulaire de grande dimension verticale ou carrée.

9. Procédé d'affichage selon l'une quelconque des revendications précédentes, **caractérisé en ce que**, l'orientation de l'écran étant déterminée par rapport à l'utilisateur, la fenêtre profil (PV) est rectangulaire de grande dimension verticale et située en regard et à côté de la fenêtre 2D5.

10. Procédé d'affichage selon l'une quelconque des revendications précédentes, **caractérisé en ce que**, l'orientation de l'écran étant déterminée par rapport à l'utilisateur, la fenêtre 3D est rectangulaire de grande dimension horizontale et située d'une part en regard de la fenêtre 2D5 et d'autre part au-dessus ou au-dessous de la fenêtre 2D5.

11. Procédé d'affichage selon les revendications 9 et 10, **caractérisé en ce que** les trois fenêtres sont accolées entre elles de manière à former sensiblement un carré de côté a, la fenêtre 2D5 formant sensiblement un rectangle de grande dimension horizontale 5a/6 et de petite dimension verticale 2a/3, la fenêtre profil (PV) formant sensiblement un rectangle de dimensions 2a/3 par a/6, la fenêtre 3D formant sensiblement un rectangle de dimensions a par a/3.

12. Procédé d'affichage selon l'une quelconque des revendications précédentes, **caractérisé en ce que**, l'orientation de l'écran étant déterminée par rapport à l'utilisateur, la fenêtre 3D est centrée par rapport à la dimension horizontale de l'écran.

13. Procédé d'affichage selon l'une quelconque des revendications précédentes, **caractérisé en ce que** le procédé comprend au moins deux modes de fonctionnement, un mode navigation dans lequel la position (p1) du point de vue dans la fenêtre 2D5 est verticalement décentrée par rapport à la fenêtre 2D5 et dans lequel l'orientation (x1) du point de vue dans la fenêtre 2D5 correspond au cap de l'aéronef, ainsi qu'un mode gestion dans lequel la position (p1) du point de vue dans la fenêtre 2D5 est centrée par rapport à la fenêtre 2D5 et dans lequel l'orientation (x1) du point de vue dans la fenêtre 2D5 correspond à une direction fixe indépendante du cap de l'aéronef.

14. Procédé d'affichage selon l'une quelconque des revendications précédentes, **caractérisé en ce que**, de chaque côté de l'ensemble constitué par les trois fenêtres (2D5, 3D, PV) représentant respectivement des aspects distincts du terrain, le procédé affiche une fenêtre d'interface homme machine (IHM).

15. Procédé d'affichage selon l'une quelconque des revendications précédentes, **caractérisé en ce que**, l'orientation de l'écran étant déterminée par rapport à l'utilisateur, la position (p1, p3) du point de vue est, à même hauteur sur l'écran, dans les fenêtres 2D5 et profil (PV).

16. Procédé d'affichage selon l'une quelconque des revendications précédentes, **caractérisé en ce que** les droites (x1, x3) représentant respectivement l'orientation du point de vue dans les fenêtres 2D5 et profil sont parallèles sur l'écran.

17. Ecran dédié à la conduite de mission, **caractérisé en ce que** l'affichage sur cet écran est commandé par un procédé d'affichage selon l'une quelconque des revendications précédentes.

18. Hélicoptère **caractérisé en ce qu'**il comporte un écran selon la revendication 17 ou un écran multi-usage dont l'affichage est commandé par un procédé d'affichage selon l'une quelconque des revendications 1 à 16.

## Patentansprüche

1. Verfahren zur Anzeige von mehreren Fenstern (2D5, 3D, PV, PH) auf einem Luftfahrzeug-Bildschirm, die je einen einzelnen Aspekt des Geländes einer vom Luftfahrzeug überflogenen Szene darstellen, **dadurch gekennzeichnet, dass** das Verfahren eine gleichzeitige Anzeige von mindestens drei miteinander korrelierten Fenstern enthält, nämlich eines Fensters 2D5, das eine Draufsicht, überlagert von einer Geländeform-Information, darstellt, eines Fensters 3D, das eine dreidimensionale Ansicht darstellt, eines Profilfensters (PV, PH), das eine Profilansicht darstellt.

2. Anzeigeverfahren nach Anspruch 1, **dadurch gekennzeichnet, dass**:
die Fenster (2D5, 3D, PV, PH) je ein kartographisches Bild enthalten,
die Ansicht des Fensters 2D5 zweidimensional ist und von einer Schattierung überlagert wird, die für die Geländeform repräsentativ ist,
das kartographische Bild des Fensters 3D eine dreidimensionale Ansicht des Geländes gemäß einer privilegierten Richtung (x2) darstellt,
das kartographische Bild des Profilfensters (PV, PH) eine Profilansicht des Geländes darstellt, wobei die Ansicht zweidimensional und für die Geländeform auf einem Band parallel zu einer privilegierten Achse (x3) repräsentativ ist,
und dass
einerseits die Position (p1, p2, p3) des Sichtpunkts für die Ansichten der drei Fenster die gleiche ist,
und andererseits die Ausrichtung (x1, x3) des Sichtpunkts zumindest für die Ansichten des Fensters 2D5 und des Profilfensters die gleiche ist.

3. Anzeigeverfahren nach Anspruch 2, **dadurch gekennzeichnet, dass** die im Profilfenster (PV, PH) dargestellte Geländeform der Obergrenze auf der Breite des Bandes entspricht, wobei die Breite orthogonal zur privilegierten Achse (x3) ist.

4. Anzeigeverfahren nach einem der vorhergehenden Ansprüche, **dadurch gekennzeichnet, dass** die Ausrichtung (x1, x2, x3) des Sichtpunkts für die Ansichten der drei Fenster die gleiche ist.

5. Anzeigeverfahren nach einem der vorhergehenden Ansprüche, **dadurch gekennzeichnet, dass**, wenn das Gelände gemäß dem Kurs des Luftfahrzeugs ausgerichtet ist, einerseits die Beleuchtung der Ansicht 2D5 künstlich und bezüglich des Bildschirms fest ist, unabhängig von den Ausrichtungsänderungen des Luftfahrzeugs, und andererseits die Beleuchtung der Ansicht 3D realistisch und bezüglich des Bildschirms variabel ist, um den Verlauf der tatsächlichen Position der Sonne in Abhängigkeit von den Ausrichtungsänderungen des Luftfahrzeugs zu berücksichtigen.

6. Anzeigeverfahren nach Anspruch 5, **dadurch gekennzeichnet, dass** bei festgelegter Ausrichtung des Bildschirms bezüglich des Benutzers die Beleuchtung der Ansicht 2D5 eine punktförmige Quelle aufweist, die sich oberhalb und links von der oberen linken Ecke der Ansicht 2D5 befindet.

7. Anzeigeverfahren nach Anspruch 6, **dadurch gekennzeichnet, dass** bei festgelegter Ausrichtung des Bildschirms bezüglich des Benutzers die Beleuchtung der Ansicht 2D5 auch eine diffuse Quelle aufweist, die sich am Zenit der Ansicht 2D5 befindet.

8. Anzeigeverfahren nach einem der vorhergehenden Ansprüche, **dadurch gekennzeichnet, dass** bei festgelegter Ausrichtung des Bildschirms bezüglich des Benutzers das Fenster 2D5 rechtwinklig mit großer senkrechter Abmessung oder quadratisch ist.

9. Anzeigeverfahren nach einem der vorhergehenden Ansprüche, **dadurch gekennzeichnet, dass** bei festgelegter Ausrichtung des Bildschirms bezüglich des Benutzers das Profilfenster (PV) rechtwinklig mit großer senkrechter Abmessung ist und sich gegenüber dem und auf der Seite des Fensters 2D5 befindet.

10. Anzeigeverfahren nach einem der vorhergehenden Ansprüche, **dadurch gekennzeichnet, dass** bei festgelegter Ausrichtung des Bildschirms bezüglich des Benutzers das Fenster 3D rechtwinklig mit großer waagrechter Abmessung ist und sich einerseits gegenüber dem Fenster 2D5 und andererseits über oder unter dem Fenster 2D5 befindet.

11. Anzeigeverfahren nach den Ansprüchen 9 und 10, **dadurch gekennzeichnet, dass** die drei Fenster so aneinander befestigt sind, dass sie im Wesentlichen ein Quadrat mit einer Seite a bilden, wobei das Fenster 2D5 im Wesentlichen ein Rechteck mit großer waagrechter Seite 5a/6 und kleiner senkrechter Seite 2a/3 bildet, wobei das Profilfenster (PV) im Wesentlichen ein Rechteck mit den Abmessungen 2a/3 zu a/6 bildet, wobei das Fenster 3D im Wesentlichen ein Rechteck mit den Abmessungen a zu a/3 bildet.

12. Anzeigeverfahren nach einem der vorhergehenden Ansprüche, **dadurch gekennzeichnet, dass** bei festgelegter Ausrichtung des Bildschirms bezüglich des Benutzers das Fenster 3D bezüglich der waagrechten Abmessung des Bildschirms zentriert ist.

13. Anzeigeverfahren nach einem der vorhergehenden Ansprüche, **dadurch gekennzeichnet, dass** das Verfahren mindestens zwei Betriebsmodi aufweist, nämlich einen Navigationsmodus, bei dem die Position (p1) des Sichtpunkts im Fenster 2D5 bezüglich des Fensters 2D5 senkrecht dezentriert ist, und bei dem die Ausrichtung (x1) des Sichtpunkts im Fenster 2D5 dem Kurs des Luftfahrzeugs entspricht, sowie einen Verwaltungsmodus, bei dem die Position (p1) des Sichtpunkts im Fenster 2D5 bezüglich des Fensters 2D5 zentriert ist, und bei dem die Ausrichtung (x1) des Sichtpunkts im Fenster 2D5 einer festen Richtung unabhängig vom Kurs des Luftfahrzeugs entspricht.

14. Anzeigeverfahren nach einem der vorhergehenden Ansprüche, **dadurch gekennzeichnet, dass** auf jeder Seite der von den drei Fenstern (2D5, 3D, PV) gebildeten Einheit, die je verschiedene Aspekte des Geländes darstellen, das Verfahren ein Mensch-Maschine-Schnittstellen-Fenster (IHM) anzeigt.

15. Anzeigeverfahren nach einem der vorhergehenden Ansprüche, **dadurch gekennzeichnet, dass** bei festgelegter Ausrichtung des Bildschirms bezüglich des Benutzers die Position (p1, p3) des Sichtpunkts sich bei gleicher Höhe auf dem Bildschirm im Fenster 2D5 und im Profilfenster (PV) befindet.

16. Anzeigeverfahren nach einem der vorhergehenden Ansprüche, **dadurch gekennzeichnet, dass** die Geraden (x1, x3), die die Ausrichtung des Sichtpunkts im Fenster 2D5 bzw. im Profilfenster darstellen, auf dem Bildschirm parallel sind.

17. Für die Durchführung eines Einsatzes bestimmter Bildschirm, **dadurch gekennzeichnet, dass** die Anzeige auf diesem Bildschirm von einem Anzeigeverfahren nach einem der vorhergehenden Ansprüche gesteuert wird.

18. Hubschrauber, **dadurch gekennzeichnet, dass** er einen Bildschirm nach Anspruch 17 oder einen Mehrfachnutzungs-Bildschirm aufweist, dessen Anzeige von einem Anzeigeverfahren gemäß einem der Ansprüche 1 bis 16 gesteuert wird.

## Claims

1. Method of display, on an aircraft screen, of several windows (2D5, 3D, VP, HP) each representing a distinct aspect of the terrain of a scene overflown by the aircraft, **characterized in that** the method comprises a simultaneous display of at least three intercorrelated windows which are, a 2D5 window representing a plan view overlaid with relief information, a 3D window representing a three-dimensional view, a profile window (VP, HP) representing a profile view.

2. Method of display according to Claim 1, **characterized in that**: windows (2D5, 3D, VP, HP) each comprise a cartographic image,
the view of the 2D5 window is two-dimensional and overlaid by a shading representative of the relief of the terrain,
the cartographic image of the 3D window represents a three-dimensional view of the terrain along a favoured direction (x2),
the cartographic image of the profile window (VP, HP) represents a profile view of the terrain, said view being two-dimensional and representative of the relief of the terrain over a band parallel to the favoured axis (x3),
and **in that**,
on the one hand the position (p1, p2, p3) of the viewpoint is the same for the views of the three windows,
and on the other hand the orientation (x1, x3) of the viewpoint is the same at least for the views of the 2D5 and profile windows.

3. Method of display according to Claim 2, **characterized in that** the relief of the terrain represented in the profile window (VP, HP) corresponds to the upper bound on the width of the band, said width being orthogonal to the favoured axis (x3).

4. Method of display according to any one of the preceding claims, **characterized in that** the orientation (x1, x2, x3) of the viewpoint is the same for the views of the three windows.

5. Method of display according to any one of the preceding claims, **characterized in that**, when the terrain is oriented along the heading of the aircraft, on the one hand the illumination of the 2D5 view is artificial and fixed with respect to the screen regardless of the changes of orientation of the aircraft, and on the other hand the illumination of the 3D view is realistic and variable with respect to the screen in such a way as to take account of the alterations of the actual position of the sun as a function of the changes of orientation of the aircraft.

6. Method of display according to Claim 5, **characterized in that**, the orientation of the screen being determined with respect to the user, the illumination of the 2D5 view comprises a point source situated above and to the left of the upper left corner of said 2D5 view.

7. Method of display according to Claim 6, **characterized in that**, the orientation of the screen being determined with respect to the user, the illumination of the 2D5 view also comprises a diffuse source situated at the zenith of said 2D5 view.

8. Method of display according to any one of the preceding claims, **characterized in that**, the orientation of the screen being determined with respect to the user, the 2D5 window is rectangular of large vertical dimension or square.

9. Method of display according to any one of the preceding claims, **characterized in that**, the orientation of the screen being determined with respect to the user, the profile window (VP) is rectangular of large vertical dimension and situated opposite and alongside the 2D5 window.

10. Method of display according to any one of the preceding claims, **characterized in that**, the orientation of the screen being determined with respect to the user, the 3D window is rectangular of large horizontal dimension and situated on the one hand opposite the 2D5 window and on the other hand above or below the 2D5 window.

11. Method of display according to Claims 9 and 10, **characterized in that** the three windows are made adjoining in such as way as to form substantially a square of side a, the 2D5 window forming substantially a rectangle of large horizontal dimension 5a/6 and of small vertical dimension 2a/3, the profile window (VP) forming substantially a rectangle of dimensions 2a/3 by a/6, the 3D window forming substantially a rectangle of dimensions a by a/3.

12. Method of display according to any one of the preceding claims, **characterized in that**, the orientation of the screen being determined with respect to the user, the 3D window is centred with respect to the horizontal dimension of the screen.

13. Method of display according to any one of the preceding claims, **characterized in that** the method comprises at least two modes of operation, a navigation mode in which the position (p1) of the viewpoint in the 2D5 window is vertically offcentred with respect to the 2D5 window and in which the orientation (x1) of the viewpoint in the 2D5 window corresponds to the heading of the aircraft, as well as a management mode in which the position (p1) of the viewpoint in the 2D5 window is centred with respect to the 2D5 window and in which the orientation (x1) of the viewpoint in the 2D5 window corresponds to a fixed direction independent of the heading of the aircraft.

14. Method of display according to any one of the preceding claims, **characterized in that**, on each side of the assembly consisting of the three windows (2D5, 3D, VP) respectively representing distinct aspects of the terrain, the method displays a man-machine interface window (MMI).

15. Method of display according to any one of the preceding claims, **characterized in that**, the orientation of the screen being determined with respect to the user, the position (p1, p3) of the viewpoint is, at equal height on the screen, in the 2D5 and profile (VP) windows.

16. Method of display according to any one of the preceding claims, **characterized in that** the lines (x1, x3) respectively representing the orientation of the viewpoint in the 2D5 and profile windows are parallel on the screen.

17. Screen dedicated to mission conduct, **characterized in that** the display on this screen is controlled by a method of display according to any one of the preceding claims.

18. Helicopter **characterized in that** it comprises a screen according to Claim 17 or a multi-use screen whose display is controlled by a method of display according to any one of Claims 1 to 16.
